# EUROPÄISCHE PATENTSCHRIFT

(11) **EP 2 219 848 B1**
(45) Veröffentlichungstag und Bekanntmachung des Hinweises auf die Patenterteilung: **12.02.2014**
(21) Anmeldenummer: 08861123.1
(22) Anmeldetag: 08.12.2008
(51) Int. Cl.: B29C 65/08, B65B 51/22

(54) **SONOTRODE MIT U-SPALT**
SONOTRODE WITH U GAP
SONOTRODE AVEC FENTE EN U

(30) Priorität: 14.12.2007 DE 102007060442
(43) Veröffentlichungstag der Anmeldung: 25.08.2010
(73) Patentinhaber: Herrmann Ultraschalltechnik GmbH & Co. KG, 76307 Karlsbad (DE)
(72) Erfinder: MÖGLICH, Hartmut, 76275 Ettlingen-Schluttenbach (DE); WIPFLER, Thomas, 76275 Ettlingen (DE); VOGLER, Ulrich, 88690 Uhldingen-Mühlhofen (DE)
(74) Vertreter: WSL Patentanwälte Partnerschaft mbB
(86) Internationale Anmeldenummer: PCT/EP2008/067030
(87) Internationale Veröffentlichungsnummer: WO 2009/077375

(56) Entgegenhaltungen:
- EP-A- 1 410 988
- WO-A1-99/09891
- GB-A- 998 124
- US-A1- 2004 076 790

## Beschreibung

Die vorliegende Erfindung betrifft eine Ultraschallsonotrode.

Ultraschallsonotroden sind aus der Fertigungstechnik, beispielsweise aus dem Ultraschallschweißen von Kunststoffen bekannt.

Ultraschall ist eine mechanische Schwingung oberhalb der Hörgrenze. Der Frequenzbereich beginnt bei etwa 20 KHz und erstreckt sich bis zu Frequenzen von 1 GHz. Solche Ultraschallfrequenzen werden häufig mit Hilfe von piezoelektrischen Schallwandlern (Konverter) aus elektrischer Energie erzeugt. Diese mechanische Schwingungsenergie wird über die mit dem Konverter, gegebenenfalls über ein Amplitudentransformationsstück (Booster) verbundene Sonotrode, auf das Werkstück bzw. das zu bearbeitende Material aufgebracht. Die Fläche der Sonotrode, die dafür vorgesehen ist, mit dem zu bearbeitenden Material in Kontakt zu treten, wird auch als Siegelfläche bezeichnet.

Das Schwinggebilde besteht somit aus Generator, Konverter, gegebenenfalls dem Amplitudentransformationsstück und der Sonotrode. Für manche Anwendungsfälle sind Konverter und Sonotrode einstückig ausgebildet.

Bei der Bearbeitung von Materialien mittels Ultraschall wird im allgemeinen das zu bearbeitende Material zwischen der Sonotrode und einem (nicht zum Schwinggebilde gehörenden) Gegenwerkzeug, welches auch Amboß genannt wird, positioniert. Die mit dem zu bearbeitenden Material in Kontakt stehende Sonotrode überträgt dann die Ultraschallenergie auf das zu bearbeitende Material, welches dadurch beispielsweise verschweißt oder abgetrennt wird.

In der Verpackungstechnik kommen häufig sogenannte horizontale oder vertikale Schlauchbeutelverpackungsmaschinen zum Einsatz. Bei diesen wird eine Materialbahn von der Rolle gezogen, zu einem Schlauch geformt und die Längskante versiegelt. Danach wird der Beutel gefüllt, in Querrichtung gesiegelt und schließlich abgetrennt. Mit dem Schweißen der Quernaht entsteht daher sowohl die Kopfnaht des gefüllten als auch die Bodennaht des nächsten Beutels. Horizontale Verpackungsmaschinen führen die zu verpackenden Güter horizontal zu, so daß diese im allgemeinen nur für Stückgüter geeignet sind. Die vertikalen Verpackungsmaschinen führen die Ware im wesentlichen in horizontaler Richtung zu, so daß sie für Schüttgüter geeignet ist.

Das Versiegeln der Längs- und Quernaht kann mit Hilfe von Ultraschall erfolgen. Dabei wird die zum Plastifizieren der Materialbahn benötigte Wärme durch die Umwandlung von Ultraschallschwingungen in Reibungsenergie erzeugt. Aufgrund der Grenzflächen- und Molekularreibung entsteht somit Wärme, die den Kunststoff anschmelzen läßt. Dabei wird die longitudinale Ultraschallschwingung genutzt.

Bei den genannten Schlauchbeutelverpackungsmaschinen wird die Folie schlauchförmig um die Ware herumlegt, so daß die beiden Folienränder während der Bewegung in Transportrichtung zusammengeführt werden. Die sich dann überlappenden Folienränder werden zum Versiegeln der Längsnaht kontinuierlich zwischen Sonotrode einerseits und Gegenwerkzeug andererseits bewegt.

Dabei ist es wesentlich, daß der Spalt zwischen Sonotrode und Gegenwerkzeug (Amboß) im wesentlichen konstant bleibt, um eine gleichbleibende Schweißqualität zu gewährleisten. Da sich das Schwinggebilde und insbesondere die Sonotrode während des Bearbeitungsvorgangs aufheizt, kommt es aufgrund der thermischen Ausdehnung der beteiligten Materialien zu einer Veränderung des Spaltmaßes, so daß die Position der Sonotrode in Bezug auf das Gegenwerkzeug nachgeregelt werden sollte.

Eine solche Nachregelung ist sehr aufwendig. Zudem nimmt das Sonotrode-Amboß-Paar in der gegenwärtigen Konfiguration sehr viel Platz ein, zumal die Bewegungsmechanik der Sonotrode ebenfalls untergebracht werden muß.

Eine Sonotrode zur Herstellung von mit Textilien beschichteten Artikeln ist in der US 2004/0076790 A1 beschrieben.

Ausgehend von dem beschriebenen Stand der Technik ist es somit Aufgabe der vorliegenden Erfindung, eine Ultraschallsonotrode, eine Ultraschallsiegelvorrichtung sowie ein Verfahren zum Ultraschallbearbeiten bereitzustellen, das eine aufwendige Positionierung der Sonotrode vermeidet und dennoch eine gleichbleibende gute Qualität der Schweißnaht gewährleistet.

In Bezug auf die Sonotrode wird diese Aufgabe durch eine Vorrichtung gemäß Anspruch 1 gelöst.

Mit anderen Worten wird das zu bearbeitende Material im Gegensatz zu den Ausführungsformen des Standes der Technik nicht mehr zwischen Siegelfläche der Sonotrode einerseits und Kontaktfläche des Gegenwerkzeugs andererseits bearbeitet, sondern durch zwei zueinander zugewandte Siegelflächenabschnitte der Siegelfläche der Sonotrode. Ein Gegenwerkzeug ist somit nicht erforderlich, so daß die aufwendige Positionierung sowie die Abstandsregelung zwischen Sonotrode und Gegenwerkzeug entfallen kann.

Dabei ist die Sonotrode mit einem Spalt versehen, wobei die beiden Siegelflächenteile durch Abschnitte der zwei zueinander zugewandten Spaltwände gebildet werden. Die Materialbearbeitung erfolgt daher innerhalb des Spalts: Grundsätzlich kann der Spalt an jeder beliebigen Stelle der Sonotrode angeordnet sein.

Es sind im Stand der Technik zwar bereits Sonotroden bekannt, die einen Schlitz aufweisen, diese Schlitze sind jedoch lediglich dafür da, das Schwingungsverhalten der Sonotrode zu beeinflussen. In keinem Fall erfolgt eine Bearbeitung des Materials innerhalb des Schlitzes.

Dabei ist es von Vorteil, wenn die beiden Siegelflächenteile im wesentlichen parallel zueinander ausgebildet sind.

Wenn sich der Spalt im wesentlichen über die gesamte Fläche erstreckt, so hat dies den Vorteil, daß die zu bearbeitende Materialbahn einfacher kontinuierlich durch den Spalt bewegt werden kann.

Wenn sich der Spalt bzw. die Spaltbreite in Richtung des Spaltgrundes erweitert, wird einerseits die Bewegbarkeit des zu bearbeitenden Materials im Spalt erleichtert und andererseits das Schwingverhalten der Sonotrode verbessert.

In einer besonders bevorzugten Ausführungsform hat der Spalt in Richtung des Spaltgrundes einen Bearbeitungsabschnitt mit einer im wesentlichen konstanten ersten Spaltbreite und einen Entlastungsabschnitt mit einer im wesentlichen konstanten zweiten Spaltbreite, wobei die zweite Spaltbreite vorzugsweise mindestens doppelt so groß und besonders bevorzugt mindestens fünfmal so groß wie die erste Spaltbreite ist.

Der Bearbeitungsabschnitt selbst kann bei einer bevorzugten Ausführungsform in Richtung des Spaltgrundes aus einem Siegelabschnitt und zwei sich beiderseits an den Siegelabschnitt anschließenden Halteabschnitten bestehen, wobei der Spalt im Bereich des Siegelabschnitts eine kleinere Spaltbreite als im Bereich der Halteabschnitte hat. Es versteht sich, daß die Spaltbreite im Bereich der Halteabschnitte sehr viel kleiner als im Bereich des Entlastungsabschnitts ist. Die Versiegelung oder wahlweise das Schneiden des Materials erfolgt lediglich im Bereich des Siegelabschnitts. Die Halteabschnitte sorgen für eine geeignete Führung des Materials.

In einer besonders bevorzugten Ausführungsform weist der Bearbeitungsabschnitt zwei Siegelabschnitte und einen zwischen den Siegelabschnitten angeordneten Halteabschnitt auf, wobei der Spalt im Bereich der Siegelabschnitte eine kleinere Spaltbreite als im Bereich des Halteabschnitts hat. Mit anderen Worten hat der Spalt im Bereich seinen Bearbeitungsabschnitts zwei Spaltverjüngungen, die sogenannten Siegelabschnitte. Diese Siegelabschnitte sorgen für die Erzeugung einer Siegelnaht. Ist daher mehr als ein Siegelabschnitt vorgesehen, so führt die Ultraschallbearbeitung zu mehreren parallelen Siegelnähten, was für manche Anwendungsfälle von Vorteil ist.

Es hat sich gezeigt, daß die Spaltbreite auch in Längsrichtung variiert werden kann. Mit Vorteil wird die Spaltbreite in Richtung der Spaltenden größer. Dies erleichtert das Einfädeln der Materialbahn in den Spalt.

In einer besonders bevorzugten Ausführungsform weist der Spalt in Längsrichtung einen zentralen Abschnitt mit einer kleinen Spaltbreite, zwei sich an gegenüberliegenden Seiten des zentralen Abschnitts anschließende Führungsabschnitte mit mittlerer Spaltbreite und zwei sich an die Führungsabschnitte anschließende Einfädelabschnitte mit großer Spaltbreite auf.

Grundsätzlich kann auch bei der erfindungsgemäßen Ausführungsform eine Variation der Spaltbreite aufgrund einer Temperaturveränderung der Sonotrode nicht ausgeschlossen werden. Zudem ist es möglich, daß sich über die Sonotrode ein Temperaturgradient ausbildet, der die Spaltbreite verändert.

Daher ist in einer bevorzugten Ausführungsform eine Einrichtung zur Regelung der Spaltbreite des Bearbeitungsabschnitts vorgesehen. Diese Einrichtung kann beispielsweise ein Heizelement zur Erzeugung eines Temperaturgradienten in der Sonotrode aufweisen. Durch lokale Erwärmung der Sonotrode kann somit Einfluß auf die Spaltbreite genommen werden.

Alternativ oder in Kombination dazu kann die Sonotrode Ausnehmungen aufweisen, in die Elemente eingesetzt sind, die aus einem Material bestehen, das einen sich von dem Sonotrodenmaterial unterscheidenden Ausdehnungskoeffizienten hat. Durch die Verwendung von Materialien mit unterschiedlichen Ausdehnungskoeffizienten kommt es bei entsprechender Erwärmung der Sonotrode automatisch, d.h. ohne daß es einer besonderen aktiven Regelung bedarf, zu einer (geringen) Verspannung der Sonotrode und einer damit verbundenen Spaltbreitenänderung. Bei geeigneter Auswahl von Material und Einsatzort kann somit der Veränderung des Spaltabstands aufgrund eines sich ausbildenden Temperaturgradienten innerhalb der Sonotrode entgegengewirkt werden.

Selbstverständlich ist es auch möglich, daß mehrere Siegelflächen vorgesehen sind. So ist es beispielsweise möglich, daß die Ultraschallsonotrode eine ganze Reihe von im wesentlichen parallel zueinander verlaufenden Spalten aufweist, durch die jeweils eine zu versiegelnde Materialbahn geführt wird. Dadurch können mit einer einzigen Sonotrode gleichzeitig eine Mehrzahl von Materialbahnen verarbeitet werden.

Weiterhin ist es möglich, daß die Siegelflächen eine Beschichtung aufweisen, um den Reibungskoeffizienten zwischen Siegelfläche einerseits und zu bearbeitendem Material andererseits zu verringern, um einem Verschleiß der Siegelflächen entgegenzuwirken.

In einer bevorzugten Ausführungsform ist der Konverter an der dem Spalt gegenüberliegenden Stirnfläche der Sonotrode angeordnet. Dadurch werden zunächst vom Konverter Längsschwingungen innerhalb der Sonotrode erzeugt, d.h. Schwingungen, die parallel zu den Siegelflächen verlaufen. Eine Längsschwingung verursacht jedoch aufgrund der periodischen Komprimierung und Streckung des Materials auch immer Querschwingungen. Der Spalt ist dann derart angeordnet, daß der Spalt im wesentlichen senkrecht zur Ultraschallausbreitungsrichtung angeordnet ist. Die durch Ultraschall verursachte Spaltbreitenvariation erfolgt dann durch die Querschwingungen. Versuche haben gezeigt, daß die Amplitude der Querschwingung von der Schlitztiefe abhängt. In einer bevorzugten Ausführungsform liegt daher das Verhältnis der Spalttiefe zur Sonotrodenlänge im Bereich zwischen 0,02 und 0,5, vorzugsweise im Bereich zwischen 0,03 und 0,35 und besonders bevorzugt im Bereich zwischen 0,05 und 0,2.

Überraschenderweise zeigt die Querschwingungsamplitude ein Maximum bei den genannten Schlitztiefen. Bei größeren oder kleineren Schlitztiefen nimmt die Amplitude ab. Eine optimale Querschwingungsamplitude liegt für eine 35 kHz-Sonotrode im Bereich zwischen 4 und 14 µm und vorzugsweise im Bereich zwischen 8 und 12 µm.

Es hat sich gezeigt, daß die Siegelteilflächen gegenphasig zueinander schwingen, so daß bei Beaufschlagung der Sonotrode mit Ultraschall die Schlitzbreite periodisch variiert, so daß es zu einer siegelnden Verarbeitung des im Spalt befindlichen Materials kommt.

Die erfindungsgemäße Sonotrode kommt somit gänzlich ohne Gegenwerkzeug aus. Die Sonotrode selbst stellt somit einteilig sowohl Sonotrode als auch Gegenwerkzeug bereit, wobei beide Flächen, die mit dem Material in Kontakt treten, mit Schwingungen beaufschlagt werden, so daß eine Einteilung in schwingende Sonotrode und stehendes Gegenwerkzeug nicht mehr möglich ist.

Grundsätzlich kann die Sonotrode aus jedem beliebigen Material hergestellt sein. Besonders geeignet haben sich Sonotroden aus Titan oder aus einem gesintertem Material, z. B. Stahl, erwiesen.

Hinsichtlich der Ultraschallsiegelvorrichtung wird die eingangs genannte Aufgabe durch eine Ultraschallsiegelvorrichtung mit einem Konverter und einer gegebenenfalls über einen Amplitudentransformator mit dem Konverter verbundene Sonotrode der genannten Art gelöst.

Dabei hat sich gezeigt, daß die Sonotrode in der Ultraschallsiegelvorrichtung vorzugsweise im wesentlichen starr an einem nicht zum Schwingungsgebilde gehörenden Element befestigt wird. Die Befestigung des Schwingungsgebildes bestehend aus Konverter, gegebenenfalls Amplitudentransformator und Sonotrode greift somit an der Sonotrode an. Unter einem nicht zum Schwingungsgebilde gehörenden Element wird jegliches Element verstanden, das nicht mit Ultraschall beaufschlagt wird und daher keine Schwingung durchführt. Selbstverständlich ist es möglich, daß dieses Element zur Justierung bewegt wird. Diese Bewegung ist jedoch im Vergleich zu den schnellen Ultraschallschwingungen vernachlässigbar, so daß von einem nicht schwingenden Element gesprochen werden kann.

Im allgemeinen ist eine starre Halterung der Sonotrode im wesentlichen quer zur zu erzeugenden Siegelnaht wichtiger als längs zur Siegelnaht. In einer bevorzugten Ausführungsform ist daher vorgesehen, daß die Sonotrode in einem Schwingungsknoten mit der Halterung befestigt ist, wobei die Halterung derart ausgeführt ist, daß sie in Richtung der Sonotrodenachse, d.h. in Schallausbreitungsrichtung, im wesentlichen starr ist, während sie in einer Richtung senkrecht zur Sonotrodenachse eine gewisse elastische Federung bereitstellt, um die Ultraschallschwingungen vollständig von der Halterung zu entkoppeln.

Die vorliegende Erfindung betrifft des weiteren ein Verfahren zum Ultraschallbearbeiten eines Materials, bei dem das zu bearbeitende Material mit der eingangs genannten Sonotrode in Kontakt tritt. Dabei wird in einer bevorzugten Ausführungsform das Material bei der Bearbeitung in Längsrichtung durch den Spalt geführt. Grundsätzlich ist es möglich, dadurch das Material zu schweißen oder zu schneiden.

In einer besonders bevorzugten Ausführungsform wird die Breite des Sonotrodenspaltes so ausgewählt, daß sie kleiner ist als die Dicke des zu bearbeitenden Materials. Vorzugsweise ist die Spaltbreite zwischen 10 und 50 % und besonders bevorzugt zwischen 20 und 40% und am besten etwa 30% kleiner als die Dicke des zu bearbeitenden Materials. Werden beispielsweise zwei Folien miteinander verschweißt, so ist die Dicke des zu bearbeitenden Materials gleich der doppelten Foliendicke.

Daher wird das zu bearbeitende Material in den Spalt eingebracht, während die Sonotrode mit Ultraschall angeregt wird. Durch die Anregung der Sonotrode mit Ultraschall kommt es zu einer periodischen Variation der Spaltbreite, so daß das Material in den Spalt eingebracht werden kann. Im nicht mit Ultraschall angeregten Zustand kann das Material im Spalt nicht bewegt werden. Erst nachdem die Sonotrode mit Ultraschall beaufschlagt wird, kann das Material in Längsrichtung des Spalts bewegt werden, so daß es zu einer Ultraschallbearbeitung kommt.

In einer bevorzugten Ausführungsform ist die Sonotrode als Rundsonotrode ausgeführt. Unter einer Rundsonotrode versteht man Sonotroden mit im Querschnitt kreisförmiger Grundform. Besonders bevorzugt ist eine Sonotrode, die an ihrem dem Konverter zugewandten Ende als Rundsonotrode ausgebildet ist und an ihrem dem Konverter abgewandten Ende als Blocksonotrode (rechteckiger Querschnitt) ausgebildet ist.

In einer alternativen Ausführungsform ist vorgesehen, daß zumindest ein, vorzugsweise beide Siegelflächenteile auf mit der Sonotrode verbundenen Platten angeordnet sind. Mindestens eine Platte kann zur Einstellung der Spaltbreite mit einer Verstellvorrichtung ausgestattet sein. Diese Ausführungsform hat den Vorteil, daß bei Abnutzung der Siegelflächen nicht die gesamte Sonotrode, sondern nur die Platte bzw. die Platten auszutauschen sind.

Weitere Vorteile, Merkmal und Anwendungsmöglichkeiten der vorliegenden Erfindung werden deutlich anhand der folgenden Beschreibung einiger bevorzugter Ausführungsformen sowie der dazugehörigen Figuren. Es zeigen:
- Figur 1: eine vertikale Schlauchbeutelverpackungsmaschine mit einer erfindungsgemäßen Sonotrode,
- Figur 2: eine Detailvergrößerung von Figur 1,
- Figuren 3a - 3e: verschiedene Ansichten einer ersten Ausführungsform einer erfindungsgemäßen Sonotrode,
- Figuren 4a - 4e: verschiedene Ansichten einer zweiten Ausführungsform einer erfindungsgemäßen Sonotrode,
- Figuren 5a - 5e: verschiedene Ansichten einer dritten Ausführungsform einer erfindungsgemäßen Sonotrode,
- Figuren 6a - 6e: eine vierte Ausführungsform einer erfindungsgemäßen Sonotrode,
- Figuren 7a - 7e: eine fünfte Ausführungsform einer erfindungsgemäßen Sonotrode,
- Figuren 8a - 8e: eine sechste Ausführungsform einer erfindungsgemäßen Sonotrode und

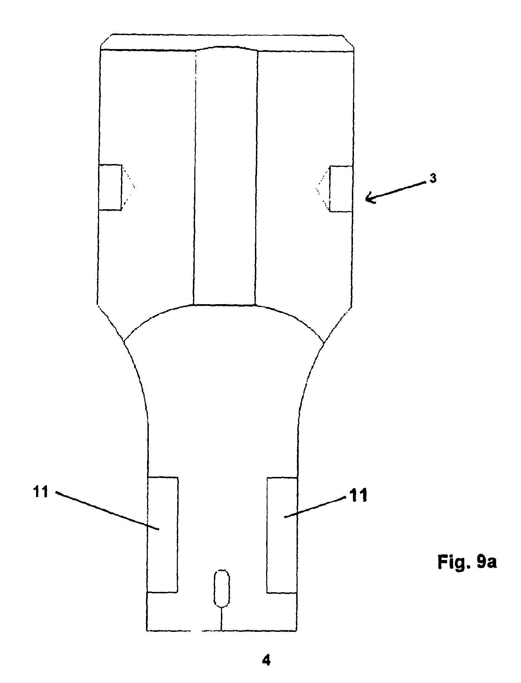

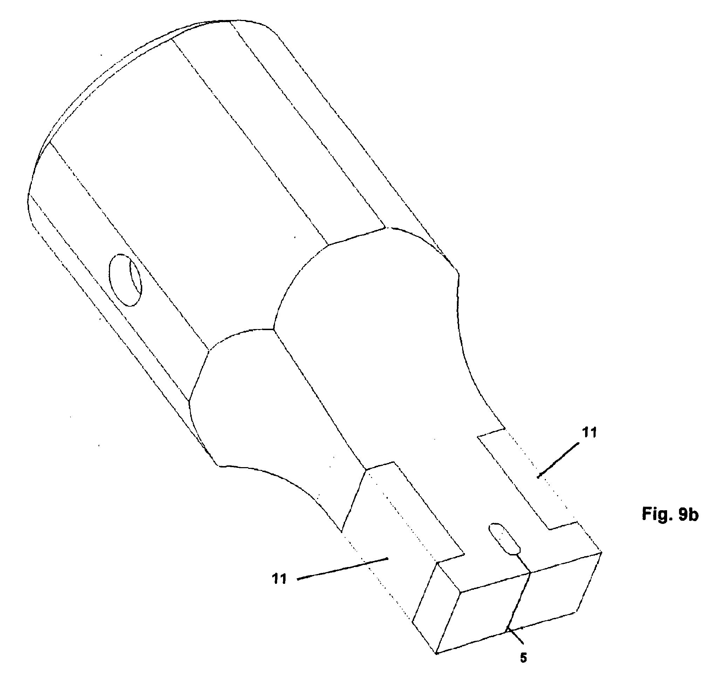

- Figuren 9a und b: zwei Ansichten einer sechsten Ausführungsform der erfindungsgemäßen Sonotrode.

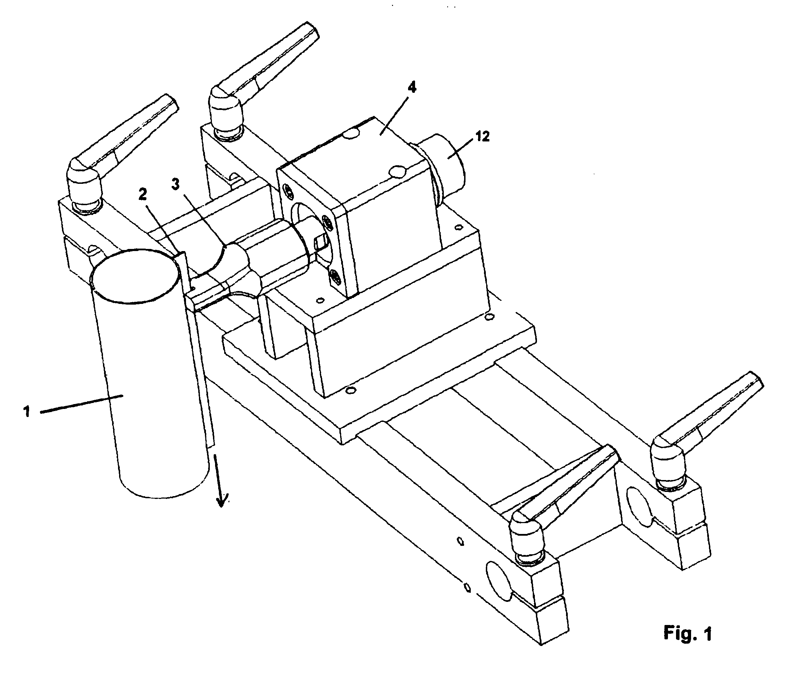

In Figur 1 ist eine vertikale Schlauchbeutelverpackungsmaschine gezeigt. Man erkennt, daß die zu verarbeitende Materialbahn 1 um ein Rohr geformt wird, so daß die beiden Bahnränder überlappen. Der Überlappbereich ist mit der Bezugszahl 2 versehen. Die aufeinanderliegenden Materialbahnen werden durch einen Spalt in der Sonotrode 3 geführt, die wiederum mit einem Konverter 4 und einem Generator 12 verbunden ist. Der Generator 12 erzeugt hochfrequente elektrische Spannung, die vom Konverter 4 in mechanische Schwingungsenergie umgewandelt wird, die über die Sonotrode 3 der Materialbahn 1 zugeführt wird. Die Verarbeitung erfolgt kontinuierlich, d.h. die Materialbahn 1 wird kontinuierlich in Pfeilrichtung bewegt, so daß in Figur 1 unterhalb der Sonotrode 3 die überlappende Materialbahn miteinander verschweißt ist. Selbstverständlich ist auch eine getaktete Bewegung möglich, bei der die Fortbewegung der Materialbahn regelmäßig - zum Beispiel um eine Quersiegelnaht aufzubringen - unterbrochen wird.

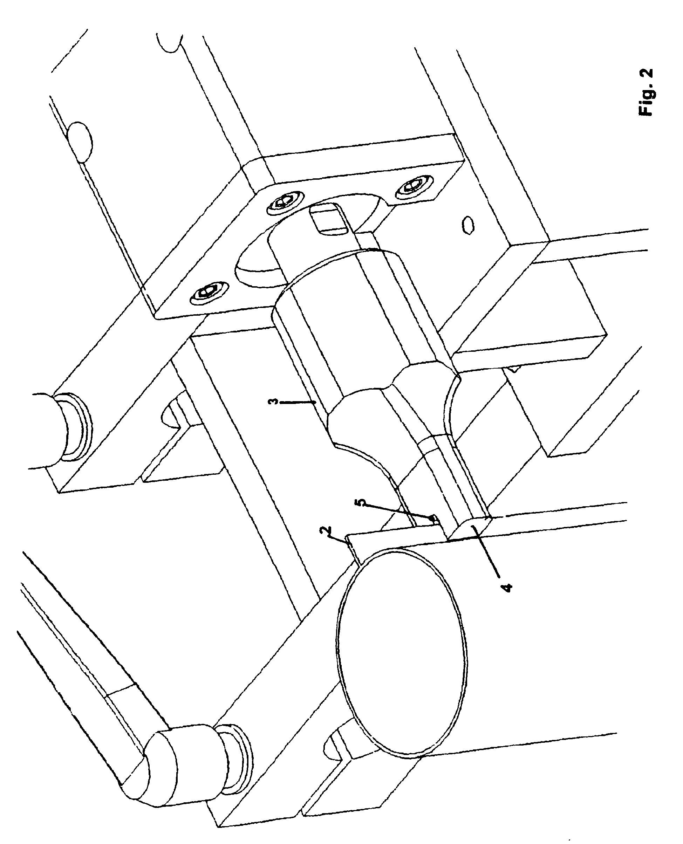

Figur 2 zeigt eine Detailvergrößerung von Figur 1. Man erkennt, daß die Sonotrode 3 an ihrer Stirnfläche 4 einen sich über die gesamte Stirnfläche 4 erstreckenden Spalt 5 aufweist, in dem sich der Überlappbereich 2 der Materialbahnränder befindet. Obgleich der Konverter 4 zunächst lediglich eine Längsschwingung auf die Sonotrode 3 überträgt, d.h. eine Schwingung in Richtung der Sonotrodenlängsachse, führt der Spalt 5 dazu, daß die beiden Stirnflächenabschnitte gegenphasig zueinander schwingen, so daß die Schlitzbereite aufgrund der Querschwingungen periodisch variiert. Dadurch werden die überlappenden Randbereiche miteinander verschweißt und somit die Längsnaht gebildet.

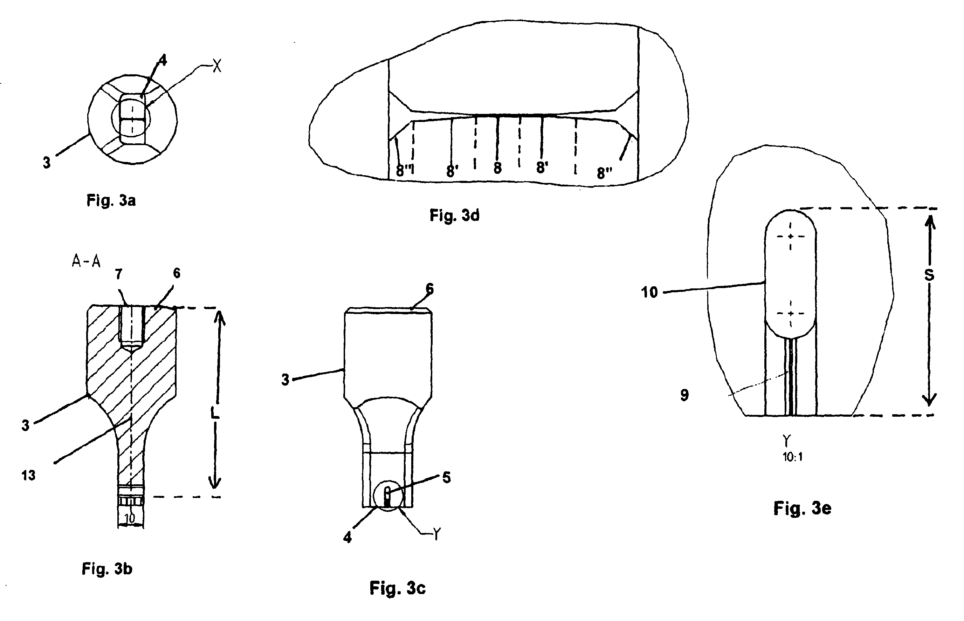

In den Figuren 3a bis 3e ist eine erste Ausführungsform einer erfindungsgemäßen Sonotrode gezeigt. Figur 3a zeigt eine Draufsicht auf die Stirnfläche 6 der Sonotrode 3. In Figur 3b ist eine Schnittansicht gezeigt. Hier ist die Sonotrodenachse als strichpunktierte Linie 13 dargestellt. Die Sonotrode 3 weist an ihrer dem Spalt 5 abgewandten Stirnfläche 6 eine Befestigungsbohrung 7 auf. Diese Bohrung dient dazu, die Sonotrode am Konverter oder gegebenenfalls an einem Amplitudentransformator zu befestigen. Man erkennt, daß die Breite der Sonotrode von der Konverterseite zur Spaltseite hin abnimmt. Figur 3c zeigt eine Seitenansicht auf die Sonotrode, in welcher der Spalt 5 in der Stirnfläche 4 deutlich erkennbar ist.

Figur 3d zeigt eine Detailvergrößerung von Figur 3a. Man erkennt, daß der Spalt in Längsrichtung (quer zur Sonotrodenachse) aus einem zentralen Abschnitt 8 mit einer kleinen Spaltbreite, zwei sich an gegenüberliegenden Seiten des zentralen Abschnitts 8 anschließenden Führungsabschnitten 8' mit mittlerer Spaltbreite und zwei sich wiederum an die Führungsabschnitte anschließenden Einfädelabschnitte 8" mit großer Spaltbreite besteht. Dabei ist die Spaltbreite des zentralen Abschnitts über den gesamten Abschnitt im wesentlichen konstant, während sich die Spaltbreite der Führungsabschnitte in Richtung der Spaltenden erweitert. Im Bereich der Einfädelabschnitte 8" kommt es zu einer abrupten Erweiterung der Spaltbreite. Das zu bearbeitende Material wird während der Bearbeitung in Längsrichtung des Spalts, d .h. in Figur 3d von links nach rechts bzw. von rechts nach links durch den Spalt bewegt. Die Bewegungsrichtung des Materials ist somit quer zur Sonotrodenachse. Die Einfädelabschnitte 8" erlauben es, daß die Materialbahnleicht in den Spalt 5 eingeführt werden kann. Die Führungsabschnitte 8' sorgen für ein glattes Anliegen der Bearbeitungsbahn auf der Spaltfläche, während der zentrale Abschnitt 8 die Bearbeitung der Materialbahn bewirkt. Die Spaltbreite im Bereich des zentralen Abschnitts 8 ist in einer bevorzugten Ausführungsform geringer als die Materialdicke, so daß die Materialbahn nur bei mit Ultraschall angeregter Sonotrode in den Spalt eingeführt werden kann.

Figur 3e zeigt eine Ausschnittsvergrößerung von Figur 3c. Man erkannt, daß der Spalt eine Tiefe S hat. In Richtung des Spaltgrundes, d.h. in Richtung der Sonotrodenachse, variiert hier die Spaltdicke ebenfalls. Der Spalt besteht in Richtung des Spaltgrundes aus einem Bearbeitungsabschnitt 9 und einem Entlastungsabschnitt 10. Die Breite des Spalts im Entlastungsabschnitt ist wesentlich größer als die Spaltbreite im Bearbeitungsabschnitt. Der Entlastungsabschnitt dient lediglich dazu, die beiden durch den Spalt 5 getrennten Sonotrodenstirnflächenabschnitte voneinander zu entkoppeln, um eine optimale Querschwingung zu erzeugen. Die Querschwingung der Sonotrode ist am größten, wenn das Verhältnis der Spalttiefe zur Sonotrodenlänge L im Bereich zwischen 0,05 und 0,2 liegt.

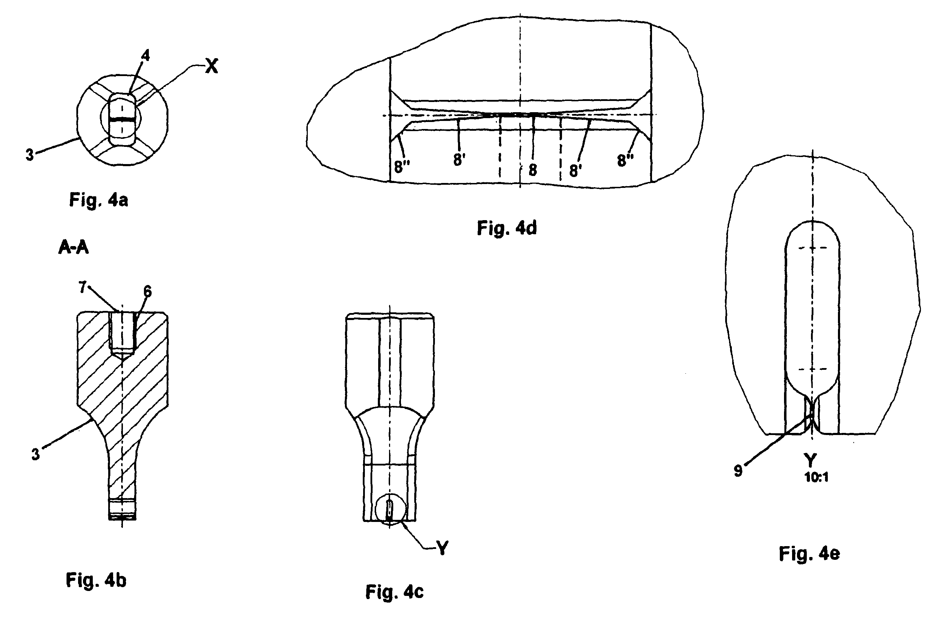

In den Figuren 4a bis 4e sind verschiedene Ansichten einer zweiten Ausführungsform der Erfindung gezeigt. Es wurden die gleichen Bezugszahlen verwendet, um gleiche Elemente zu kennzeichnen. Man erkennt insbesondere in Figur 4d, daß der zentrale Abschnitt in dieser Ausführungsform kleiner ausgeführt ist. In Figur 4e ist zu erkennen, daß auch der Bearbeitungsabschnitt 9 im Vergleich zur in den Figuren 3a bis 3e gezeigten Ausführungsform deutlich verringert ist.

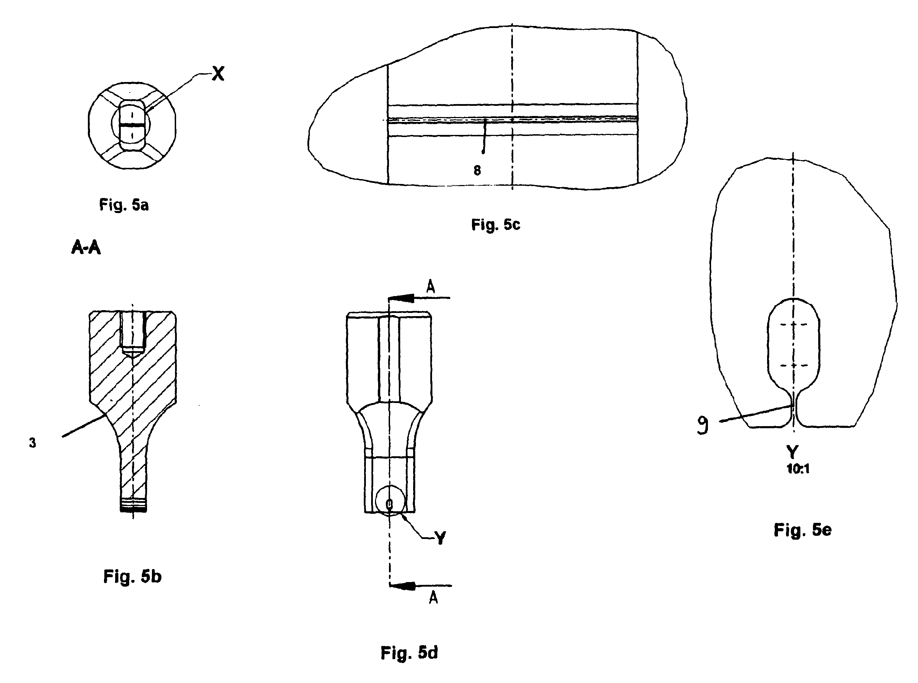

In den Figuren 5a bis 5e ist eine dritte Ausführungsform einer erfindungsgemäßen Sonotrode gezeigt. Auch hier wurden, soweit möglich, gleiche Bezugszahlen verwendet, um gleiche Elemente zu bezeichnen. Man erkennt in Figur 5c, daß die Schlitzbreite in Querrichtung im Unterschied zu den vorherigen Ausführungsformen konstant bleibt.

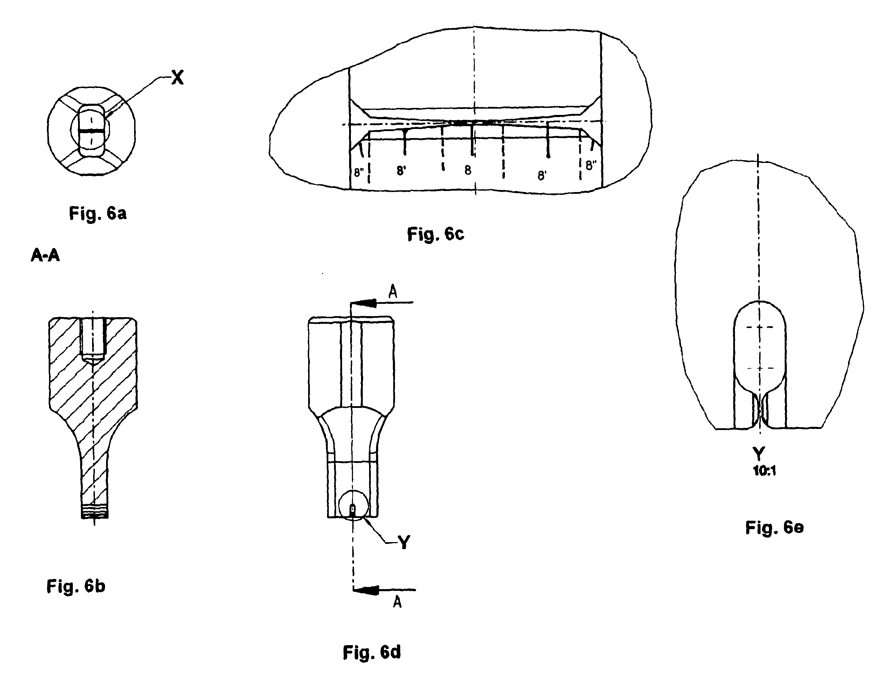

In den Figuren 6a bis 6e ist eine vierte Ausführungsform der erfindungsgemäßen Sonotrode gezeigt. Diese Ausführungsform ist ähnlich der in den Figuren 4a bis 4e gezeigten Ausführungsform, wobei hier jedoch die Spalttiefe deutlich reduziert ist.

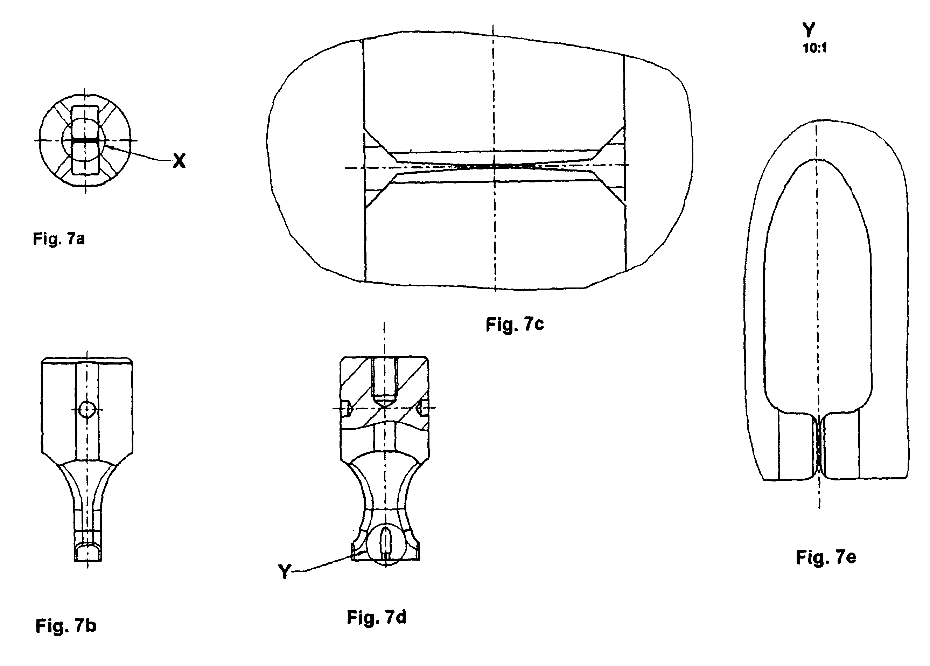

In den Figuren 7a bis 7e ist eine fünfte Ausführungsform der erfindungsgemäßen Sonotrode gezeigt. Man erkennt in Figur 7d, daß hier die Sonotrode in Richtung der Stirnfläche 4 sich im Unterschied zu den vorherigen Ausführungsformen wieder erweitert. Diese Form ist von Vorteil, um die Querschwingungsamplitude zu optimieren.

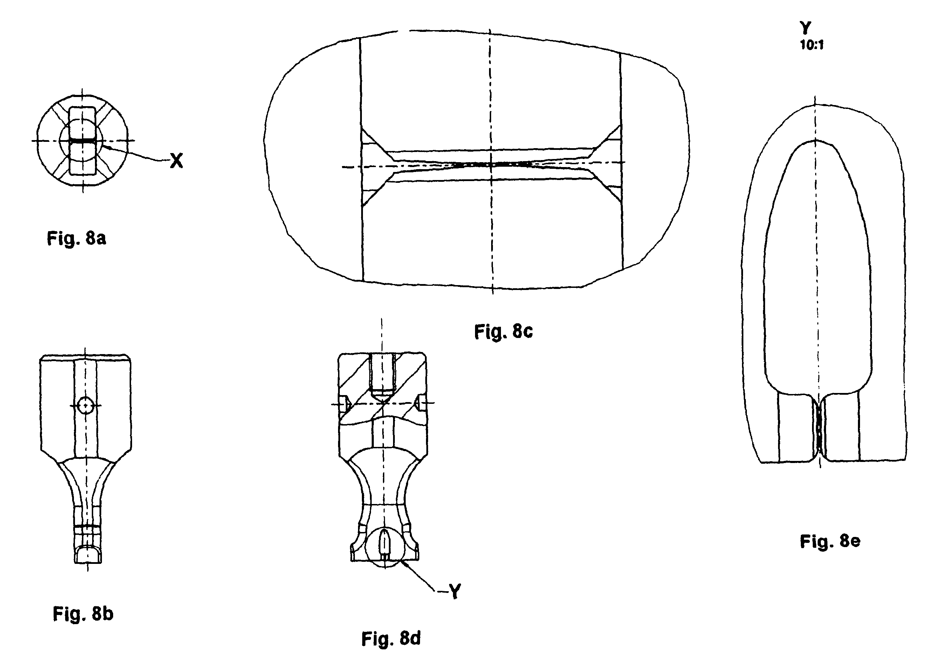

In den Figuren 8a und 8b ist schematisch eine weitere Ausführungsform der erfindungsgemäßen Sonotrode gezeigt. Hier ist deutlich zu erkennen, daß im Bereich des stirnseitigen Endes 4 der Sonotrode 3 zwei Ausgleichselemente 11 in die Sonotrode eingebracht worden sind. Diese Ausgleichselemente 11 sind aus einem Material hergestellt, das sich von dem Material der Sonotrode darin unterscheidet, daß es einen anderen Ausdehnungskoeffizienten hat. Insbesondere in der perspektivischen Ansicht von Figur 8b wird deutlich, daß ein sich innerhalb der Sonotrode aufgrund der Wärme ausbildender Temperaturgradient ganz offensichtlich Auswirkungen auf die Breite des Spalts 3 im Bereich des Bearbeitungsabschnitts haben wird. Um diese Variation zu kompensieren, werden die Ausgleichselemente 11 derart angepaßt, daß sie der Spaltbreitenveränderung entgegenwirken.

Durch die vorliegende Erfindung wird eine Sonotrode und ein Verfahren bereitgestellt, mit dem insbesondere vertikale Schlauchbeutelverpackungsmaschine deutlich vereinfacht werden können. Ein speziell angeordnetes Gegenwerkzeug, zu dem die Sonotrode eingestellt und gegebenenfalls nachgeregelt werden muß, ist nicht mehr erforderlich. Der Platzbedarf für die Siegeleinrichtung wird deutlich verringert.

### Bezugszeichenliste:

- 1: Materialbahn
- 2: überlappender Bereich
- 3: Sonotrode
- 4: Konverter
- 5: Spalt
- 6: Stirnfläche
- 7: Befestigungsbohrung
- 8: zentraler Abschnitt
- 8': Führungsabschnitte
- 8": Einfädelabschnitte
- 9: Bearbeitungsabschnitt
- 10: Entlastungsabschnitt
- 11: Ausgleichselemente
- 12: Generator
- 13: Sonotrodenachse

## Patentansprüche

1. Ultraschallsonotrode (3) mit einer Siegelfläche, die dafür vorgesehen ist, mit dem zu bearbeitenden Material in Kontakt zu treten, wobei die Siegelfläche zweiteilig ausgebildet ist und die beiden Siegelflächenteile durch zwei zueinander zugewandte Siegelflächenabschnitte gebildet werden, die Sonotrode in einer Stirnfläche (6) einen Spalt (5) aufweist, wobei die beiden Siegelflächenteile durch Abschnitte der zwei zueinander zugewandten Spaltwände gebildet werden und sich die Spaltbreite in Richtung der Spaltenden erweitert.

2. Sonotrode nach Anspruch 1 , **dadurch gekennzeichnet, daß** die beiden Siegelflächenteile im wesentlichen parallel zueinander ausgebildet sind.

3. Sonotrode nach einem der Ansprüche 1 bis 2, **dadurch gekennzeichnet, daß** der Spalt sich im wesentlichen über die gesamte Stirnfläche erstreckt.

4. Sonotrode nach einem der Ansprüche 1 bis 3, **dadurch gekennzeichnet, daß** sich die Spaltbreite in Richtung des Spaltgrundes erweitert, wobei vorzugsweise der Spalt in Richtung des Spaltgrundes einen Bearbeitungsabschnitt mit einer ersten Spaltbreite und einen Entlastungsabschnitt mit einer zweiten Spaltbreite, wobei die zweite Spaltbreite vorzugsweise mindestens doppelt so groß und besonders bevorzugt mindesten fünfmal so groß wie die erste Spaltbreite ist und besonders bevorzugt der Bearbeitungsabschnitt in Richtung des Spaltgrundes aus einem Siegelabschnitt und zwei sich beidseits an den Siegelabschnitt anschließenden Halteabschnitten besteht, wobei der Spalt im Bereich des Siegelabschnittes eine kleinere Spaltbreite als im Bereich der Halteabschnitte hat.

5. Sonotrode nach Anspruch 4, **dadurch gekennzeichnet, daß** der Bearbeitungsabschnitt zwei Siegelabschnitte und einen zwischen den Siegelabschnitten angeordneten Halteabschnitt aufweist, wobei der Spalt im Bereich der Siegelabschnitte eine kleinere Spaltbreite als im Bereich des Halteabschnittes hat.

6. Sonotrode nach einem der Ansprüche 1 bis 5, **dadurch gekennzeichnet, daß** der Spalt in Längsrichtung einen zentralen Abschnitt (8) mit einer kleinen Spaltbreite, zwei sich an gegenüberliegenden Seiten des zentralen Abschnitts (8) anschließende Führungsabschnitte (8') mit mittlerer Spaltbreite und zwei sich an die Führungsabschnitte anschließende Einfädelabschnitte (8") mit großer Spaltbreite aufweist.

7. Sonotrode nach einem der Ansprüche 1 bis 6, **dadurch gekennzeichnet, daß** die Sonotrode eine Einrichtung zur Regelung der Spaltbreite des Bearbeitungsabschnitts aufweist, wobei vorzugsweise die Regelungseinrichtung ein Heizelement zur Erzeugung eines Temperaturgradienten in der Sonotrode aufweist und/oder die Sonotrode aus mindestens zwei Materialien mit unterschiedlichem Ausdehnungskoeffizienten hergestellt sind.

8. Sonotrode nach einem der Ansprüche 1 bis 7, **dadurch gekennzeichnet, daß** mehrere Siegelflächen vorgesehen sind und/oder die Siegelflächen eine Beschichtung aufweisen.

9. Sonotrode nach einem der Ansprüche 1 bis 8, **dadurch gekennzeichnet, daß** mindestens ein Siegelelement vorgesehen ist, das an der Sonotrode abnehmbar befestigt ist und einen Siegelflächenabschnitt trägt, wobei vorzugsweise das mindestens eine Siegelelement verschiebbar ist, um den Abstand zwischen den beiden Siegelflächenabschnitten einzustellen.

10. Sonotrode nach einem der Ansprüche 1 bis 9, **dadurch gekennzeichnet, daß** das Verhältnis aus Spalttiefe und Sonotrodenlänge im Bereich zwischen 0,02 und 0,5, vorzugsweise im Bereich zwischen 0,03 und 0,35 und besonders bevorzugt im Bereich zwischen 0,05 und 0,2 liegt.

11. Ultraschallsiegelvorrichtung mit einem Konverter und einer gegebenenfalls über einen Amplitudentransformator mit dem Konverter verbundenen Sonotrode nach einem der Ansprüche 1 bis 10, wobei vorzugsweise die Sonotrode im wesentlichen starr an einem nicht schwingendem Element befestigt ist.

12. Verfahren zum Ultraschallbearbeiten eines Materials, bei dem das zu bearbeitende Material mit einer Sonotrode nach einem der Ansprüche 1 bis 11 in Kontakt tritt, wobei vorzugsweise das Material bei der Bearbeitung in Längsrichtung durch den Spalt geführt wird und/oder das Material geschweißt oder geschnitten wird.

13. Verfahren nach Anspruch 12, **dadurch gekennzeichnet, daß** die Breite des Sonotrodenspaltes kleiner als die Dicke des zu bearbeitenden Materials ist, wobei vorzugsweise die Spaltbreite zwischen 10 und 50 % und besonders bevorzugt zwischen 20 und 40% und am besten etwa 30% kleiner als die Dicke des zu bearbeitenden Materials ist, wobei vorzugsweise das zu bearbeitende Material in den Spalt eingebracht wird, während die Sonotrode mit Ultraschall angeregt wird.

14. Verfahren nach einem der Ansprüche 12 bis 13, **dadurch gekennzeichnet, daß** die Spaltbreite durch Transversalschwingungen variiert wird.

## Claims

1. An ultrasonic sonotrode (3) having a sealing surface which is intended to come into contact with the material to be processed, **characterized in that** the sealing surface is of a two-part configuration and the two sealing surface parts are formed by two mutually facing sealing surface portions, the sonotrode has a gap (5) in an end face (6), wherein the two sealing surface portions are formed by portions of the two mutually facing gap walls and the gap width is enlarged in the direction of the end of the gap.

2. A sonotrode as set forth in claim 1, **characterized in that** the two sealing surface portions are of a substantially mutually parallel configuration.

3. A sonotrode as set forth in claim 1 through 2, **characterized in that** the gap extends substantially over the entire end face.

4. A sonotrode as set forth in one of claims 1 through 3, **characterized in that** the gap width is enlarged in the direction of the bottom of the gap, wherein preferably in the direction of the bottom of the gap the gap has a processing portion of a first gap width and a relief portion of a second gap width, wherein the second gap width is preferably twice as great and particularly preferably at least five times as great as the first gap width and particularly preferably in the direction of the bottom of the gap the processing portion comprises a sealing portion and two holding portions adjoining the sealing portion at both sides, wherein the gap is of a smaller gap width in the region of the sealing portion than in the region of the holding portions.

5. A sonotrode as set forth in claim 4, **characterized in that** the processing portion has two sealing portions and a holding portion arranged between the sealing portions, wherein the gap is of a smaller gap width in the region of the sealing portions than in the region of the holding portion.

6. A sonotrode as set forth in one of claims 1 through 5, **characterized in that** in the longitudinal direction the gap has a central portion (8) of a small gap width, two guide portions (8') of medium gap width, that adjoin oppositely disposed sides of the central portion (8), and two threading-in portions (8") of large gap width, that adjoin the guide portions.

7. A sonotrode as set forth in one of claims 1 through 6, **characterized in that** the sonotrode has a device for regulating the gap width of the processing portion, wherein preferably the regulating device has a heating element for producing a temperature gradient in the sonotrode and/or the sonotrode is made from at least two materials involving different coefficients of expansion.

8. A sonotrode as set forth in one of claims 1 through 7, **characterized in that** there are provided a plurality of sealing surfaces and/or the sealing surfaces have a coating.

9. A sonotrode as set forth in one of claims 1 through 8, **characterized in that** there is provided at least one sealing element which is removably fixed to the sonotrode and carries a sealing surface portion, wherein preferably the at least one sealing element is displaceable to adjust the spacing between the two sealing surface portions.

10. A sonotrode as set forth in one of claims 1 through 9, **characterized in that** the ratio of gap depth and sonotrode length is in the range between 0.02 and 0.5, preferably in the range of between 0.03 and 0.35 and particularly preferably in the range of between 0.05 and 0.2.

11. An ultrasonic sealing apparatus comprising a converter and a sonotrode as set forth in one of claims 1 through 10, that is connected to the converter optionally by way of an amplitude transformer, wherein preferably the sonotrode is substantially rigidly fixed to a non-vibrating element.

12. A method of ultrasonic processing of a material, in which the material to be processed comes into contact with a sonotrode as set forth in one of claims 1 through 11, wherein preferably in the processing operation the material is guided through the gap in the longitudinal direction and/or the material is welded or cut.

13. A method as set forth in claim 12, **characterized in that** the width of the sonotrode gap is smaller than the thickness of the material to be processed, wherein preferably the gap width is between 10 and 50 % and particularly preferably between 20 and 40 % and at best about 30 % smaller than the thickness of the material to be processed, wherein preferably the material to be processed is introduced into the gap while the sonotrode is excited with ultrasound.

14. A method as set forth in one of claims 12 through 13, **characterized in that** the gap width is varied by transverse vibrations.

## Revendications

1. Sonotrode à ultrasons (3) possédant une surface de scellage qui est prévue pour entrer en contact avec le matériau à travailler, la surface de scellage étant en deux parties et les deux parties de la surface de scellage étant formées par deux segments de la surface de scellage qui sont en regard l'un de l'autre, la sonotrode présentant une fente (5) dans une surface frontale (6), les deux parties de la surface de scellage étant formées par des segments des deux parois de la fente qui sont en regard l'une de l'autre, et la largeur de la fente s'élargissant en direction des extrémités de la fente.

2. Sonotrode selon la revendication 1, **caractérisée en ce que** les deux parties de la surface de scellage sont sensiblement parallèles entre elles.

3. Sonotrode selon l'une des revendications 1 et 2, **caractérisée en ce que** la fente s'étend sensiblement sur toute la surface frontale.

4. Sonotrode selon l'une des revendications 1 à 3, **caractérisée en ce que** la largeur de la fente s'élargit en direction du fond de la fente, la fente présentant de préférence, en direction du fond de fente, un segment de travail possédant une première largeur de fente et un segment de décharge possédant une seconde largeur de fente, la seconde largeur de fente étant de préférence au moins deux fois plus grande et, de façon particulièrement préférée, au moins cinq fois plus grande que la première largeur de fente, et le segment de travail étant formé, de façon particulièrement préférée, en direction du fond de la fente, d'un segment de scellage et de deux segments de retenue qui se raccordent au segment de scellage sur les deux côtés, la fente possédant une plus petite largeur de fente dans la région du segment de scellage que dans la région du segment de retenue.

5. Sonotrode selon la revendication 4, **caractérisée en ce que** le segment de travail présente deux segments de scellage et un segment de retenue disposé entre les segments de scellage, la fente ayant une plus petite largeur de fente dans la région des segments de scellage que dans la région du segment de retenue.

6. Sonotrode selon l'une des revendications 1 à 5, **caractérisée en ce que**, dans la direction de la longueur, la fente présente un segment central (8) ayant une petite largeur de fente, deux segments de guidage (8') faisant suite aux côtés opposés du segment central (8) et ayant une largeur de fente moyenne et deux segments d'enfilage (8") faisant suite aux segments de guidage et ayant une plus grande largeur de fente.

7. Sonotrode selon l'une des revendications 1 à 6, **caractérisée en ce que** la sonotrode présente un dispositif de régulation de la largeur de fente du segment de travail, le dispositif de régulation possédant de préférence un élément chauffant destiné à produire un gradient de température dans la sonotrode, et/ou la sonotrode étant fabriquée en au moins deux matériaux qui possèdent des coefficients de dilatation différents.

8. Sonotrode selon l'une des revendications 1 à 7, **caractérisée en ce qu'**il est prévu plusieurs surfaces de scellage et/ou **en ce que** les surfaces de scellage présentent un revêtement.

9. Sonotrode selon l'une des revendications 1 à 8, **caractérisée en ce qu'**il est prévu au moins un élément de scellage qui est fixé à la sonotrode de façon démontable et qui porte un segment de surface de scellage, l'élément de scellage ou chaque élément de scellage pouvant de préférence se déplacer pour régler la distance entre les deux segments de surface de scellage.

10. Sonotrode selon l'une des revendications 1 à 9, **caractérisée en ce que** le rapport de la profondeur de fente à la longueur de la sonotrode se trouve dans l'intervalle de 0,02 à 0,5, de préférence dans l'intervalle de 0,03 à 0,35 et de façon particulièrement préférée dans l'intervalle de 0,05 à 0,2.

11. Dispositif de scellage par ultrasons comprenant un convertisseur et une sonotrode selon l'une des revendications 1 à 10, éventuellement connectée au convertisseur par l'intermédiaire d'un transformateur d'amplitude, la sonotrode étant de préférence fixée de façon sensiblement rigide à un élément non oscillant.

12. Procédé de travail aux ultrasons d'un matériau, dans lequel le matériau à travailler entre en contact avec une sonotrode selon l'une des revendications 1 à 11, et où, pendant le travail, le matériau est de préférence guidé dans la direction longitudinale à travers la fente et/ou soudé ou découpé.

13. Procédé selon la revendication 12, **caractérisé en ce que** la largeur de la fente de la sonotrode est plus petite que l'épaisseur du matériau à travailler, la largeur de la fente étant plus petite, de préférence d'entre 10 et 50 % et, de façon particulièrement préférée, d'entre 20 et 40 % et, au mieux, d'environ 30 %, que l'épaisseur du matériau à travailler, le matériau à travailler étant de préférence introduit dans la fente pendant que la sonotrode est excitée par des ultrasons.

14. Procédé selon l'une des revendications 12 à 13, **caractérisé en ce que** la largeur de la fente est modifiée par des oscillations transversales.
